# EUROPEAN PATENT APPLICATION

(11) **EP 4 749 604 A1**
(43) Date of publication of application: **27.05.2026**
(21) Application number: 24876973.9
(22) Date of filing: 06.09.2024
(51) Int. Cl.: G09B 9/00, G06F 3/048, G09B 9/04

(54) **SIMULATOR SYSTEM**

(30) Priority: 13.10.2023 JP 2023177397
(71) Applicant: KOBELCO CONSTRUCTION MACHINERY CO., LTD., Hiroshima-shi, Hiroshima 731-5161 (JP)
(72) Inventor: SHIMAZU, Yasuhiko, Hiroshima-shi, Hiroshima 731-5161 (JP)
(74) Representative: TBK
(86) International application number: PCT/JP2024/032103
(87) International publication number: WO 2025/079374

(57) **Abstract**

A simulator system includes: a calculator that is configured to reproduce, in a virtual space, a working machine including an attachment, and a surrounding environment of the working machine; a display part that displays the working machine and the surrounding environment; and an input device that receives a manipulation from an operator. The calculator includes: an object processing section that is configured to move an object of at least one of the working machine and the surrounding environment so that the working machine comes into an unsafe state; and a manipulation determination section that determines, on the basis of a content of a manipulation input from the operator into the input device when the working machine is in an attention required state prior to transition to the unsafe state, appropriateness or inappropriateness of the manipulation input into the input device.

## Description

### Technical Field

The present invention relates to a simulator system for simulative manipulation of a working machine that is reproduced in a virtual space.

### Background Art

For instance, Patent Literature 1 describes a driving teaching result evaluation system that evaluates a content of a driving manipulation by a driving simulator.

For example, in simulation of the working machine, a manipulation from an operator is desired to be evaluated as appropriate or inappropriate depending on a situation of at least one of a working machine and a surrounding environment.

### Citation List

### Patent Literature

Patent Literature 1: Japanese Patent Publication No. 3761484

### Summary of Invention

The present invention has an object of providing a simulator system that achieves evaluation of appropriateness or inappropriateness of a manipulation from an operator.

A simulator system according to an aspect of the present invention includes: a calculator that is configured to reproduce, in a virtual space, a working machine including an attachment, and a surrounding environment of the working machine; a display part that displays the working machine and the surrounding environment; and an input device that receives a manipulation from an operator to make the working machine act in the virtual space. The calculator includes: an object processing section that is configured to move an object of at least one of the working machine and the surrounding environment so that the working machine comes into an unsafe state; and a- manipulation determination section that determines, on the basis of a content of a manipulation input from the operator into the input device when the working machine is in an attention required state prior to transition to the unsafe state, appropriateness or inappropriateness of the manipulation input into the input device.

### Brief Description of Drawings

Fig. 1 is a block diagram showing a simulator system 1.
Fig. 2 is an illustration of a working machine 4 and a target object displayed on operator equipment 10 shown in Fig. 1.
Fig. 3 is an illustration of a specific example of the operator equipment 10 shown in Fig. 1.
Fig. 4 is an illustration of a manipulation part 11a included in the operator equipment 10 illustrated in Fig. 3, and a target object of the manipulation part 11a.
Fig. 5 is an illustration of a situation where a person approaches the working machine 4 illustrated in Fig. 2.
Fig. 6 is an illustration of a menu screen image displayed on the operator equipment 10 illustrated in Fig. 3.
Fig. 7 is an illustration of a displaying example on a display unit in a site work mode selected from the menu screen image illustrated in Fig. 6.
Fig. 8 is a flowchart showing menu processing by a calculator 13 shown in Fig. 1.
Fig. 9 is a flowchart showing a driving teaching process to be executed in the menu processing shown in Fig. 8.
Fig. 10 is a flowchart showing a safety training process to be executed in the menu processing shown in Fig. 8.
Fig. 11 is a flowchart showing a manipulation determination to be executed in the safety training process shown in Fig. 10.

### Description of Embodiments

A simulator system 1 according to an embodiment of the present invention will be described with reference to the accompanying drawings.

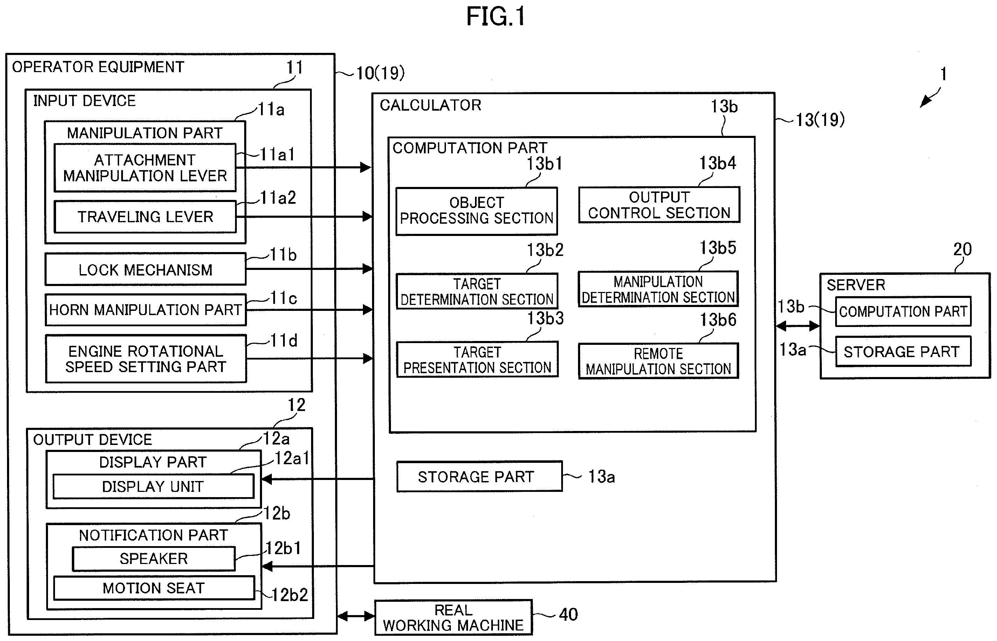

As shown in Fig. 1, the simulator system 1 is a system for simulative manipulation of a working machine 4 that is reproduced in a virtual space. The working machine 4 to be manipulated in the simulator system 1 will be described.

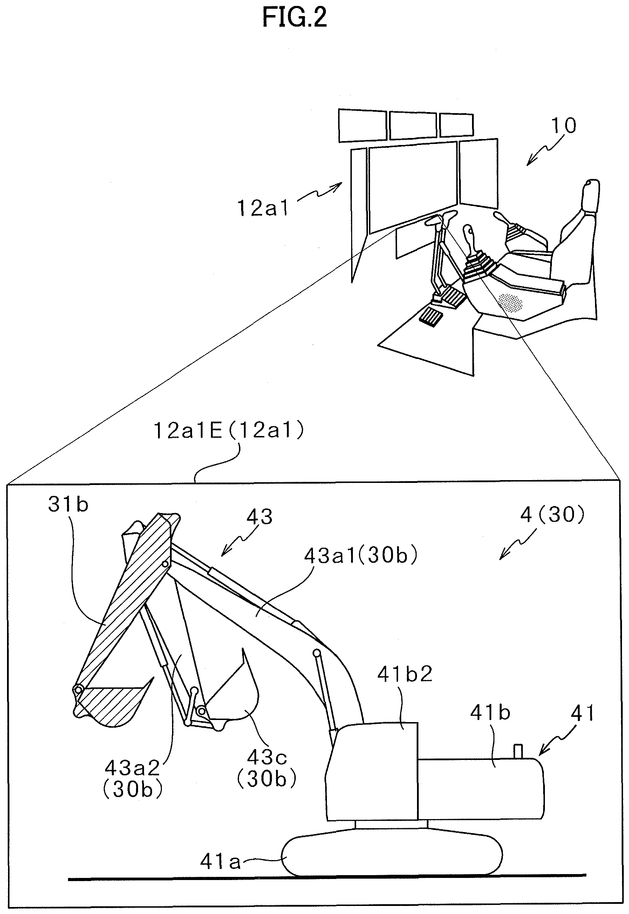

As illustrated in Fig. 2, the working machine 4 represents a thme-dimensional model simulating a real working machine. The working machine 4 is, for example, a construction machine that performs a construction work, and may be, for example, an excavator, a crane, a bulldozer, a wheel loader, or a dump truck (transportation vehicle). Hereinafter, the working machine 4 is mainly described as the excavator. The working machine 4 may act on the basis of information preset in a calculator 13. The working machine 4 may act in response to a manipulation by hand from a user. The working machine 4 may travel, an upper slewing body 41b (to be described later) may slew with respect to a lower traveling body 41a (to be described later), and an attachment 43 has a posture that may change. The working machine 4 may spray washing fluid to an outer surface of a windshield or windscreen (not shown). The working machine 4 may wipe out rainwater, washing fluid, and other fluid adhered to the outer surface of the windshield (not shown). The working machine 4 may include a light, e.g., a headlight, to illuminate a place or thing ahead of the working machine 4 (not shown). The working machine 4 may be merely arranged in the virtual space without acting.

The working machine 4 includes a machine main body 41 and the attachment 43.

The machine main body 41 is a main body of the working machine 4. The machine main body 41 includes the lower traveling body 41a and the upper slewing body 41b.

The lower traveling body 41a is configured to travel on a traveling surface, such as the ground. The lower traveling body 41a may include a crawler 41a1 or a wheel (not shown).

The upper slewing body 41b is configured to slew with respect to the lower traveling body 41a. The upper slewing body 41b may include an operating compartment 41b2. The operating compartment 41b2 allows the operator to get therein to manipulate a working machine. The operating compartment 41b2 may be fixedly attached to a bottom (slewing frame) of the upper slewing body 41b. The operating compartment 41b2 may be movable with respect to the bottom of the upper slewing body 41b. In this case, the operating compartment 41b2 may be movable parallelly to an up-down direction or rotatable in the up-down direction, or may be movable parallelly to and rotatable in the up-down direction, with respect to the bottom of the upper slewing body 41b. For instance, the operating compartment 41b2 may be an elevator cab, a linking cab, or a tilting cab. The operating compartment 41b2 in the form of the elevator cab is movable in the up-down direction with respect to the bottom of the upper slewing body 41b. The operating compartment 41b2 in the form of the linking cab is arranged at the bottom of the upper slewing body 41b via a linking mechanism. The operating compartment 41b2 in the form of the linking cab is movable in the up-down direction and the front-rear direction with respect to the bottom of the upper slewing body 41b in response to activation of the linking mechanism. The operating compartment 41b2 in the form of the tilting cab is movable or tiltable in the up-down direction about a rotation axis extending in a lateral direction as the center with respect to the bottom of the upper slewing body 41b. The operating compartment 41b2 may include an accessory attached to a main body part of the operating compartment 41b2. Examples of the accessory may include a guard to protect a top surface or the windshield of the operating compartment 41b2 from a flying object.

The attachment 43 is a mechanism (working device) to perform a work. The attachment 43 is tiltable (rotatable in the up-down direction) with resect to the upper slewing body 41b. The attachment 43 includes a boom 43a1, an arm 43a2, and a distal end attachment 43c.

The boom 43a1 is rotatably attached to the upper slewing body 41b. The arm 43a2 is rotatably attached to the boom 43a1.

The distal end attachment 43c is provided on a distal end of the attachment 43. The distal end attachment 43c is rotatably attached to the arm 43a2. The distal end attachment 43c may be a bucket to scoop or excavate a work target. The distal end attachment 43c may be a device, such as a grapple or a crusher, to sandwich a work target, may be a device, such as a breaker, to crash a work target, or may be a lifting magnet to attract a metal work target. Such a target (work target) for a work by the distal end attachment 43c may be soil and sand, stones, timbers, metals, resin, wastes, or a structure like a block.

The simulator system 1 is a system for simulative manipulation of the working machine 4 in the virtual space. Specifically, the simulator system 1 is available to teach a manipulation way of the working machine 4 to the operator. Besides, the simulator system 1 is available for safety education concerning the working machine 4 to the operator. In other words, the simulator system 1 has a driving teaching function of teaching manipulation concerning the working machine 4 to the operator, and a safety education function of giving the safety education concerning the working machine 4 to the operator. The "operator" represents a user of the simulator system. The simulator system 1 may include, for example, at least one of a personal computer, a tablet, and a smartphone.

As shown in Fig. 1, the simulator system 1 includes operator equipment 10 and the calculator 13. The simulator system 1 may further include a server 20.

The operator equipment 10 is manipulatable by the operator. The operator equipment 10 may be manipulated when the operator receives the driving teaching concerning the working machine 4. The operator equipment 10 may be manipulated when the operator receives the safety education concerning the working machine 4. The operator equipment 10 may be available for remote manipulation of a real working machine 40 being a real machine corresponding to the working machine 4.

The operator equipment 10 includes an input device 11 and an output device 12.

The input device 11 is configured to input information into the calculator 13. The input device 11 is manipulatable by the operator. The input device 11 may be used for manipulations respectively to start and finish each of the driving teaching and the safety education. The input device 11 may be used for a manipulation to repeat the same driving teaching or the same safety education. The input device 11 may include at least one of a mouse, a keyboard, a touch screen, a joystick, a pedal, and a game pad. The input device 11 may be a touch screen provided to a display part 12a (e.g., a display) to be described later. The input device 11 may have operability for remote manipulation of the real working machine 40. The input device 11 may receive instructions respectively to start and finish act of the working machine 4.

The input device 11 includes a manipulation part 11a, a lock mechanism 11b, a horn manipulation part 11c, and an engine rotational speed setting part 11d.

The manipulation part 11a is a device that receives a manipulation from the operator to make the working machine 4 act in the virtual space. The manipulation part 11a includes a traveling lever 11a2 and an attachment manipulation lever 11a1.

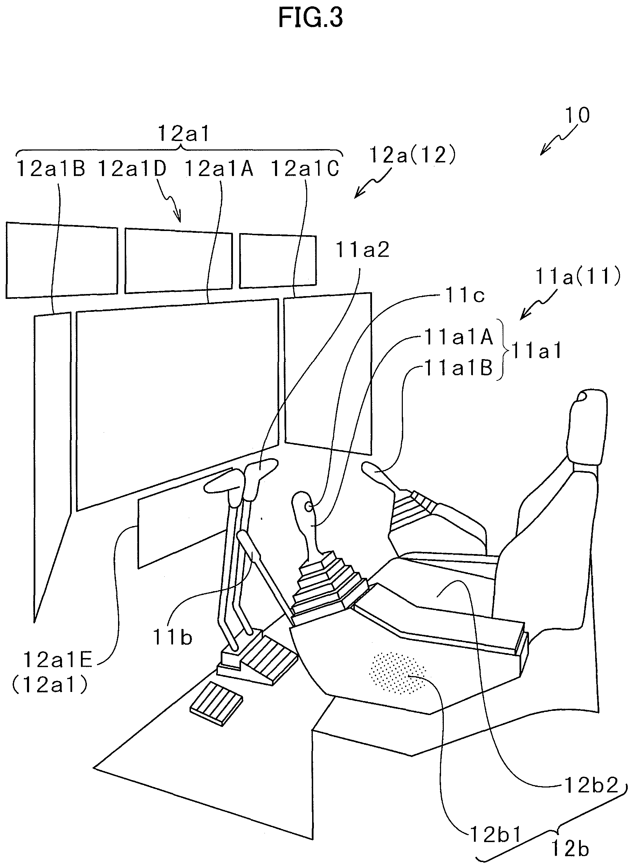

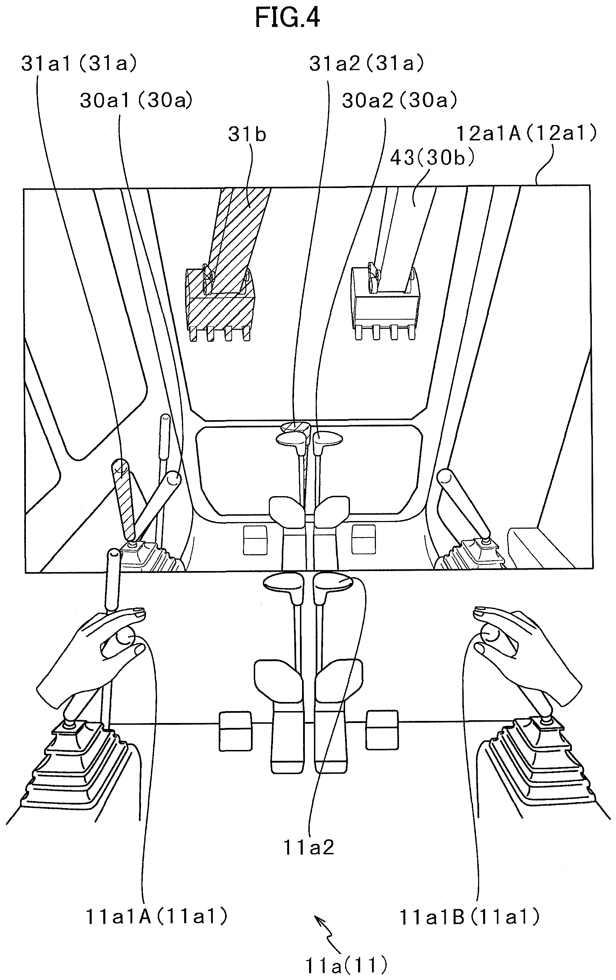

The traveling lever 11a2 is manipulated to make the working machine 4 travel. As illustrated in Fig. 3, the traveling lever 11a2 is located in front of a motion seat 12b2 (to be described later). The traveling lever 11a2 includes a pair of levers located next to each other in a left-right direction. The traveling lever 11a2 has a lower portion to which a traveling pedal is fixed (see Fig. 4).

The attachment manipulation lever 11a1 is manipulated to control an operation of the attachment 43. The attachment manipulation lever 11a1 includes a left manipulation lever 11a1A and a right manipulation lever 11a1B. The left manipulation lever 11a1A is located in front of a left frame of the motion seat 12b2. The right manipulation lever 11a1B is located in front of a right frame of the motion seat 12b2. Each of the left manipulation lever 11a1A and the right manipulation lever 11a1B is configured to allow for a plurality of manipulations including tilting in the front-rear direction and tilting in the left-right direction. Each function for slewing of the upper slewing body 41b, for an operation of the boom 43a1, for an operation of the arm 43a2, and for an operation of the distal end attachment 43c in the working machine 4 (see Fig. 2) is allotted to corresponding one of the manipulations. The allotment to the corresponding manipulation may be changeable.

The lock mechanism 11b is manipulated to lock the working machine 4 so as not to act. The lock mechanism 11b is located in front of the left manipulation lever 11a1A. The lock mechanism 11b has, for example, a lever shape. The lock mechanism 11b may lock the working machine 4 so as not to move, for example, with its lever raised to be in an ON-state against any manipulation of each manipulation lever. The lock mechanism 11b may release the locking state, for example, with its lever lowered to be in an OFF-state.

The horn manipulation part 11c is manipulated to honk a horn. The horn manipulation part 111c is provided to the left manipulation lever 11a1A in the example in Fig. 3. The horn manipulation part 11c is, for example, a button. The engine rotational speed setting part 11d (see Fig. 1) is a device to set an engine rotational speed of the working machine 4 in the virtual space (not shown in Fig. 3). The engine rotational speed setting part 11d changes a traveling speed (acting or operation speed) of the working machine 4.

As shown in Fig. 1, the output device 12 is configured to make output in response to an instruction from the calculator 13. The output device 12 includes the display part 12a and a notification part 12b.

As illustrated in Fig. 3, the display part 12a is a device to display information for the operator. The display part 12a is, for example, a monitor or screen. The display part 12a displays results of calculation by the calculator 13 (see Fig. 1). The display part 12a displays the virtual space resulting from calculation by the calculator 13. The display part 12c is used to display the virtual space where the working machine 4 is reproduced. The display part 12a may be used to give guidance on each of the driving teaching and the safety training. The display part 12a may be used to explain a manipulation way of the working machine 4. Hereinafter, the operation "display(ing)" means displaying that the calculator 13 causes the display part 12a to execute.

The display part 12a includes a display unit 12a1. The display unit 12a1 is located in front of the motion seat 12b2. The display unit 12a1 includes a plurality of displays, that is, seven displays in the embodiment. Specifically, the display unit 12a1 includes a main center display 12a1A, a main left display 12a1B, a main right display 12a1C, an upper display 12a1D having three divisions in the left-right direction, and a lower display 12a1E. A part of or all the displays in the display unit 12a1 may each include a touch screen.

The notification part 12b (see Fig. 1) is a device to notify the operator. Examples of output from the notification part 12b include one or more of sound output and vibration output. For instance, the notification part 12b provides feedback on a manipulation of the operator. For instance, the notification part 12b notifies the operator of a manipulation to be input. The output from the notification part 12b may be displayed on the display part 12a.

The notification part 12b includes a speaker 12b1 and the motion seat 12b2.

The motion seat 12b2 gives motion to provide the operator with the feedback. The motion of the motion seat 12b2 for the feedback includes one of or both the fluctuation in a tilt angle of a seat base and the vibration of the seat base. When the working machine 4 acts in the virtual space, the motion seat 12b2 is configured to reproduce movement corresponding to the act and provides the operator with feedback. For instance, the motion seat 12b2 receives a signal indicating tilting of the working machine 4 and is controlled to be tilted in the same manner. The motion seat 12b2 provides the operator, who manipulates the input device 11, with the feedback through vibration. Specifically, the motion seat 12b2 vibrates in response to a manipulation from the operator to the input device 11 to provide the operator with the feedback on an acting state of the working machine 4. The motion seat 12b2 has such a form as a high back chair with armrests. For instance, the motion seat 12b2 may be a seat base having any form which allows the operator to sit thereon, such as a form of a low back chair without a headrest or a form of a chair without a backrest.

The speaker 12b1 outputs a sound or voice. For instance, the speaker 12b1 is used to output sound or voice guidance, and used to output a honking sound of a horn. In the example in Fig. 3, the speaker 12b1 is located on a left side of the left frame of the motion seat 12b2.

The calculator 13 (see Fig. 1) is a computer including a processor that inputs and outputs a signal, executes computation, and stores information. The calculator 13 is configured to reproduce, in a virtual space, the working machine 4 and a surrounding environment. Each function of the calculator 13 comes into effect when a computation part 13b executes a program stored in a storage part 13a. Examples of the function of the calculator 13 include functions of an object processing section 13b1, a target determination section 13b2, a target presentation section 13b3, an output control section 13b4, a manipulation determination section 13b5, and a remote manipulation section 13b6, each section being described later. The calculator 13 and other devices (e.g., the input device 11, the output device 12) may be connected to each other through wireless communication or wired communication. The calculator 13 receives information input from the input device 11. The calculator 13 outputs information to the output device 12. The calculator 13 and the server 20 may exchange information. Such exchange between the calculator 13 and the server 20 may be made through a communication way, e.g., a cellular network, an optical line, a wireless local area network (LAN), or a wired LAN.

As illustrated in Fig. 2, the calculator 13 is configured to reproduce the working machine 4 in the virtual space. The working machine 4 may result from reproducing the whole of the real working machine 40, or may result from reproducing a part of the real working machine 40. The calculator 13 is further configured to reproduce, in the virtual space, a surrounding environment of the real working machine 40. Examples of the surrounding environment to be reproduced include a person, the ground, a work target, an obstacle, a transport vehicle, a wall, and a top of slope. Hereinafter, each element of the working machine 4 and the surrounding environment reproduced or to be reproduced in the virtual space is occasionally and generally referred to as an "object". Each object represents a model of each element of the working machine 4 and the surrounding environment, and may be a three-dimensional model or a two-dimensional model.

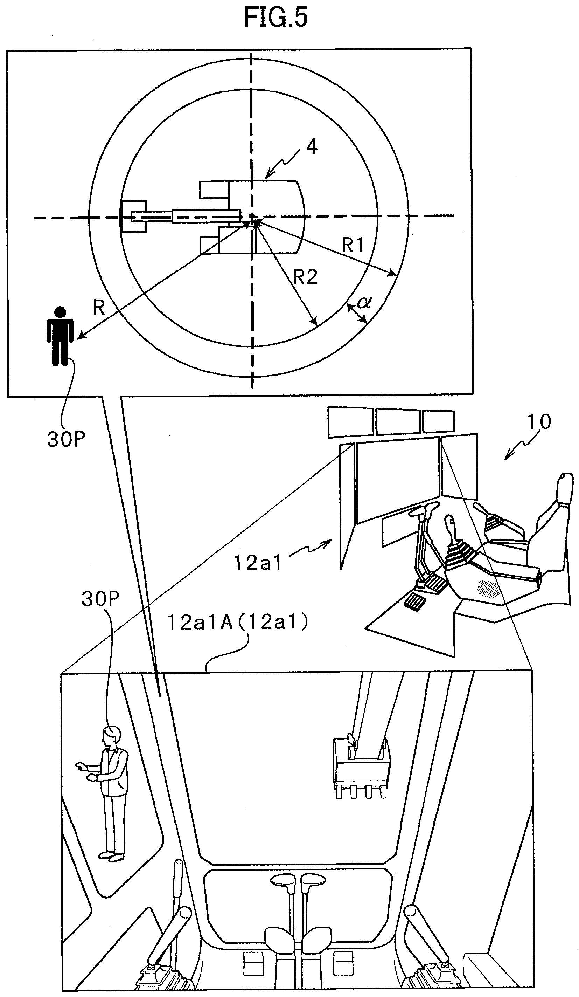

For instance, each of the clements of the attachment 43 including the boom 43a1, the arme 43a2, and the distal end attachment 43c serves as an object of the working machine 4. Each of the elements including a person and the ground to be reproduced around the working machine 4 serves as an object of the surrounding environment. For instance, in the example in Fig. 5, a person object 30P resulting from reproducing the person is generated as an object of the surrounding environment. The calculator 13 has an object processing function to control the object.

The calculator 13 includes the storage part 13a and the computation part 13b.

The storage part 13a (see Fig. 1) stores various kinds of information. The storage part 13a stores a program for the simulator system 1. The storage part 13a stores, in advance, an appropriate manipulation depending on a situation of one of or both the working machine 4 and the surrounding environment. The storage part 13a stores notification reflecting appropriateness or inappropriateness of a manipulation received by the input device 11 in advance, the appropriateness or inappropriateness being determined by the manipulation determination section 13b5. The storage part 13a stores a manipulation target of each object of the working machine 4. The manipulation target represents a destination of the object resulting from an appropriate manipulation, that is, resulting from input of an expected manipulation that agrees with the appropriate manipulation stored in advance into the input device 11, the destination being settable to a different position depending on a situation. In other words, the storage part 13a stores a plurality of setting patterns for a manipulation target in such a manner as to be each available depending on a situation. The storage part 13a stores a report. The report may be stored in a storage part 13a included in the server 20. The storage part 13a stores authentication information for logging-in. The authentication information may be stored in the storage part 13a of the server 20.

The computation part 13b (see Fig. 1) executes computation including various calculations and determinations. The computation part 13b includes the object processing section 13b1, the target determination section 13b2, the target presentation section 13b3, the output control section 13b4, the manipulation determination section 13b5, and the remote manipulation section 13b6. The object processing section 13b1 controls an object. For instance, in presence of an object (hereafter, referred to as a "movable object") that moves in response to a manipulation from the operator to the input device 11, the object processing section 13b1 controls the movement of the movable object. The target determination section 13b2 determines whether the movable object moves to a manipulation target thereof. Specifically, the target determination section 13b2 determines whether the movable object reaches the same position as a target object representing a movable object having moved to the manipulation target. The target presentation section 13b3 selects, on the basis of a current state of the working machine 4, a setting pattern sequentially from a plurality of setting patterns for the target object stored in the storage part 13a, and present the target object in association with the selected pattern. The output control section 13b4 decides a content to be output to the output device 12. The manipulation determination section 13b5 determines appropriateness or inappropriateness of the manipulation received by the input device 11. The remote manipulation section 13b6 controls remote manipulation of the real working machine 40 through the input device 11. The computation part 13b may have an authentication section (not shown). The authentication section authenticates logging-in by a user. The authentication section identifies the user with user identification information. The user identification information may be stored in the storage part 13a in association with a report. Examples of the user identification information include a user name and a user ID. The authentication may be executed by the computation part 13b of the server 20.

The server 20 (see Fig. 1) is a computer to operate in response to an instruction from a client apparatus 19. The operator equipment 10 (the input device 11 and the output device 12) and the calculator 13 constitute the client apparatus 19. The server 20 may store authentication information that is used by the computation part 13b to authenticate the user. The server 20 may execute the authentication of authenticating the user. A combination of the client apparatus 19 and the server 20 may enable the functions of the simulator system 1, for example, each function of the object processing section 13b1, the target determination section 13b2, the target presentation section 13b3, the output control section 13b4, the manipulation determination section 13b5, and the remote manipulation section 13b6, to come into effect. At least one of the storage part 13a and the computation part 13b in the calculator 13 may be provided to the client apparatus 19 and the server 20. A plurality of the servers 20 may be provided. The simulator system 1 may not include the server 20. The input device 11 may be provided to the server 20 (not shown). In this case, for instance, various kinds of information may be input from the input device 11 provided to the server 20 into the calculator 13 provided to the client apparatus 19.

The real working machine 40 (see Fig. 1) is a real machine having the same configuration as the working machine 4 simulated by the simulator system 1. The simulator system 1 may include a remote manipulation apparatus to remotely manipulate the real working machine 40. The simulator system 1 may be mounted on the remote manipulation apparatus. The remote manipulation apparatus includes an input device 11, a calculator 13, and an output device 12. The input device 11 includes a manipulation part 11a including, for example, a manipulation lever and a manipulation pedal, and outputs a manipulation signal (e.g., a lever manipulation signal, a pedal manipulation signal) in response to a manipulation to the manipulation part 11a. The calculator 13 and the real machine to be remotely manipulated exchange signals therebetween via a communication way for remote manipulation. The calculator 13 transmits, to the real machine, a signal (act instruction signal) to make a working device (corresponding to the attachment 43) or a traveling device (corresponding to the lower traveling body 41a) of the real working machine 40 operate on the basis of a manipulation signal input from the input device 11 for the remote manipulation. The calculator 13 receives, via a communication way, image data of a camera mounted in the real working machine 40 and a signal output from a sensor mounted in the real working machine 40 for the remote manipulation. The output device 12 (specifically, the display unit 12a1) outputs the image data of the camera (data acquired by the calculator 13) mounted in the real working machine 40 for the remote manipulation.

The simulator system 1 including or serving as the remote manipulation apparatus enables the user to manipulate the working machine 4 in the virtual space by using the remote manipulation apparatus for the remote manipulation of the real working machine 40. The configuration thus allows the user to experience a manipulative feeling of the real working machine 40 through the manipulation of the working machine 4 in the virtual space. This results in, for example, encouraging the user to master the manipulation of the remote manipulation apparatus. Moreover, for example, the configuration achieves easy estimation as to what situation may occur when the real working machine 40 on the worksite is manipulated through the remote manipulation apparatus.

The simulator system 1 (mainly, the calculator 13) executes processes to be described below. A simulation program causes the calculator 13 to execute the processes to be described below. The simulator system 1 achieves a method of executing the processes.

### Object processing function

The calculator 13 (specifically, the object processing section 13b1) has an object processing function of processing an object. Various functions of the simulator system 1 are equivalent to steps in a simulation program and a simulation method. For instance, the object processing function of processing an object is equivalent to an object processing step. Each of the processing function of an object 30 and the object processing step includes displaying the object on the display unit 12a1.

The calculator 13 is configured to move at least one of the working machine 4 and the surrounding environment. The working machine 4 may act in response to a manipulation from an operator or may automatically act. For instance, the working machine 4 may act under a machine control (by a machine control system, MC). Specifically, a work plan is set for the calculator 13. For instance, the operator manipulates only a part of elements (e.g., only the boom 43a1) of the attachment 43 (see Fig. 2). At this time, the calculator 13 is configured to automatically control the remaining elements (e.g., the arm 43a2, the distal end attachment 43c) which are not manipulated by the operator so that the working machine 4 works in accordance with the work plan. The calculator 13 controls the act of the working machine 4 on the basis of a posture of the working machine 4. The control is applicable to autonomous driving. As a result, the working machine 4 works in accordance with the work plan. For instance, the working machine 4 may act under autonomous driving. In this case, the calculator 13 is configured to control the act of the working machine 4 so that the working machine 4 automatically works in accordance with the work plan.

### Movement of Object in response to Manipulation

The calculator 13 is configured to make an object operate in response to input received by the manipulation part 11a (see Fig. 3). For instance, the calculator 13 may make the lower traveling body 41a (see Fig. 2) operate to allow the working machine 4 to travel in response to a manipulation to the traveling lever 11a2 (sec Fig. 3). For instance, the calculator 13 may make the upper slewing body 41b (see Fig. 2) slew in response to a manipulation to the left manipulation lever 11a1A (see Fig. 3) in the left-right direction. For instance, the calculator 13 may make the arm 43a2 rotate in response to a manipulation to the left manipulation lever 11a1A in the front-rear direction. For instance, the calculator 13 may make the boom 43al (see Fig. 2) rotate in response to a manipulation to the right manipulation lever 11a1B (see Fig. 3) in the front-rear direction. For instance, the calculator 13 may make the distal end attachment 43c (see Fig. 2) rotate in response to a manipulation to the right manipulation lever 11a1B in the left-right direction.

The calculator 13 is configured to change an operation speed of a manipulation object of the input device 11 depending on a manipulation amount of the input device 11. For instance, the calculator 13 changes an operation speed of the attachment 43 depending on a manipulation amount of the attachment manipulation lever 11a1. The calculator 13 changes an acting speed of the working machine 4 in accordance with an engine rotational speed set by the engine rotational speed setting part 11d. For instance, the calculator 13 changes a reference operation speed of the attachment 43 and a reference traveling speed of the working machine 4 in accordance with the engine rotational speed.

### Displayed Content on Display Part

As illustrated in Fig. 4, an object of the working machine 4 manipulated through the input device 11 is displayed on the display part 12a (specifically, the display unit 12a1). The object of the working machine 4 is displayed in a state from a viewpoint set in advance. The set viewpoint may be a viewpoint of the operator sitting on an operator seat in the operating compartment 41b2. In this case, the working machine 4 to be displayed may be a part of the working machine 4. For instance, an internal component of the operating compartment 41b2 that comes into a view field from the operator seat and the attachment 43 seen through a window of the operating compartment 41b2 may be displayed.

The set viewpoint may be a viewpoint from above (in a top view), a viewpoint from a side (in a side view), or a viewpoint from obliquely above (in a perspective view). The working machine 4 may be displayed from a plurality of viewpoints. For instance, one or more of the perspective view, the side view, and the top view may be displayed.

The display part 12a may display a target object representing an appropriate destination of a movable object being an object that can move, in addition to an object of the working machine 4 described above. As described above, the target object is an object representing a destination of the movable object resulting from an expected manipulation from the operator to the input device 11. The display part 12a also displays an object representing the surrounding environment of the working machine 4. Examples of the object of the surrounding environment include one or more of a person, the ground, a work target, an obstacle, a transport vehicle, a wall, and a top of slope.

The attachment 43 displayed on the display part 12a includes an attachment movable object 30b corresponding to a movable part, e.g., the arm 43a2 and the distal end attachment 43c. The attachment movable object 30b is a movable object that moves in response to a manipulation to the input device 11.

As illustrated in Fig. 4, the display part 12a further displays an object simulating each constituent element of the input device 11. Such an object of the input device 11 is generated in the operating compartment 41b2 of the working machine 4. The object of the input device 11 includes an input device movable object 30a simulating a movable part of the manipulation part 11a, such as the attachment manipulation lever 11a1 and the traveling lever 11a2. The input device movable object 30a is a movable object that moves in response to a manipulation to the input device 11. The input device movable object 30a includes a traveling lever object 30a2 simulating the traveling lever 11a2, and an attachment manipulation lever object 30a1 simulating the attachment manipulation lever 11a1. When the traveling lever 11a2 is manipulated, the traveling lever object 30a2 is displayed to move in synchronization with the manipulation. When the attachment manipulation lever 11a1 is manipulated, the attachment manipulation lever object 30al is displayed to move in synchronization with the manipulation. When the attachment manipulation lever 11a1 is manipulated, a movable part of the attachment 43, i.e., the attachment movable object 30b, is displayed to move in synchronization with the manipulation.

Although not shown, the calculator 13 may be configured to cause the display part 12a to display information indicating a relation of a current location of the movable part, such as the attachment manipulation lever 11a1 and the traveling lever 11a2 in the input device 11, to a movable range of the movable part. For instance, the calculator 13 shows a relation of a current location of a movable part of the input device 11 to a movable range of the movable part through displaying of a predetermined shape object representing the current location on an object simulating a gauge indicating the movable range.

The calculator 13 may be configured to cause the display part 12a to display information indicating a relation of a current location of the attachment 43 to a movable range of the attachment 43. For instance, the calculator 13 shows a relation of a current location of the attachment 43 to a movable range of the attachment 43 through displaying of a predetermined shape object representing the current location on an object simulating a gauge representing the movable range.

The calculator 13 may execute, in an emphasizing manner, the displaying of the movable object to be an object of the manipulation received by the input device 11. The calculator 13 may adjust a view angle on the display unit 12a1 so that the distal end attachment 43c that works is always displayed.

Displayed contents on respective displays of the display unit 12a1 are variously settable. For instance, as illustrated in Fig. 4, the main center display 12a1 displays a view field from the operator seat of the working machine 4. For instance, the lower display 12a1E displays a side view of the working machine 4. For instance, any one of the displays of the display unit 12a1 may display guidance on each of the driving teaching and the safety training. For instance, any one of the displays of the display unit 12a1 may display a perspective view of the working machine 4. For instance, any one of the displays of the display unit 12a1 may display manipulation explanation of the working machine 4 and a top view of the working machine 4.

### Driving Teaching Function

The calculator 13 is configured to present a manipulation target of a movable object of the working machine 4, and determine whether the movable object reaches the manipulation target. For instance, the calculator 13 (specifically, the target determination section 13b2) determines whether a movable object reaches the same position as a target object representing a manipulation target.

The manipulation target may include a relative angle of a movable object to be a manipulation object, e.g., an angle of the arm 43a2 to the boom 43a1. The manipulation target may include an angular velocity of rotation or slewing of a movable object. The manipulation target may include a coordinate aimed at by a movable object. The manipulation target may be displayed as a target object. The target object may be displayed through images from a plurality of viewpoints.

The target object is an object to serve as a manipulation target representing an appropriate destination of the movable object of the working machine 4. The operator manipulates the input device 11 to make the working machine 4 in the virtual space act with an aim of the target object. The target object is superimposed on the movable object. The target object has the same form as the movable object. For instance, the target object may have the same or substantially the same appearance as the movable object. The definition of "the same form" includes, for example, a form of the movable object changed into a translucent state and a form of the movable object whose outline is only displayed.

Examples of the target object include an attachment target object 31b and an input device target object 31a.

As illustrated in Fig. 2, the attachment target object 31b is an object representing a manipulation target of the attachment 43, that is, an object representing a destination of the attachment movable object 30b resulting from a manipulation (an expected manipulation) to the input device 11, the manipulation agreeing with an appropriate manipulation stored in advance. The attachment movable object 30b is an object of a movable part of the attachment 43, such as the boom 43a1, the arm 43a2, and the distal end attachment 43c, and is a kind of movable object of the working machine 4. The attachment target object 31b may be displayed on the display unit 12al in a state of being superimposed on the attachment movable object 30b (see Fig. 2). As illustrated in Fig. 4, the attachment target object 31b may by displayed without being superimposed on the attachment movable object 30b from a certain viewpoint.

As illustrated in Fig. 4, the input device target object 31a is an object representing a manipulation target of the input device 11, that is, an object representing a destination of the input device movable object 30a resulting from a manipulation (an expected manipulation) to the input device 11, the manipulation agreeing with an appropriate manipulation stored in advance. The input device movable object 30a is an object of a movable part of the input device 11, such as the attachment manipulation lever 11a1 and the traveling lever 11a2, and is a kind of movable object of the working machine 4. Specifically, the input device movable object 30a includes the attachment manipulation lever object 30a1 simulating the attachment manipulation lever 11a1, and the traveling lever object 30a2 simulating the traveling lever 11a2. The input device target object 31a includes an attachment manipulation lever target object 31a1 representing a manipulation target of the attachment manipulation lever 11a1, and a traveling lever target object 31a2 representing a manipulation target of the traveling lever 11a2. The input device target object 31a may be displayed on the display unit 12al in a state of being superimposed on the input device movable object 30a. In the example in Fig. 4, the attachment manipulation target object 31a1 is displayed in the state of being superimposed on the attachment manipulation lever object 30a1. Similarly, the traveling lever target object 31a2 is displayed in the state of being superimposed on the traveling lever object 30a2.

The calculator 13 (specifically, the target presentation section 13b3) is configured to select and present a target object (manipulation target). The calculator 13 may present a target object in various orders. Specific examples will be described below. For instance, the calculator 13 may select, on the basis of a current state of the working machine 4, a setting pattern sequentially from a plurality of setting patterns for a target object stored in advance, and present the target object in association with the selected setting pattern. The calculator 13 may be configured to execute displaying of a target object in association with a plurality of setting patterns sequentially. The calculator 13 may finish the presentation of the target object by the target presentation section 13b3 in response to specific input (e.g., input into a touch screen). The calculator 13 may execute redisplaying of a target object in association with a previously selected setting pattern in response to specific input (e.g., input into the touch screen).

The operator manipulates the input device 11 while watching the working machine 4 and the target object displayed on the display part 12a to make a movable object of the working machine 4 approach a target object. The calculator 13 may receive a manipulation only for a movable object (manipulation object) corresponding to a target object.

The calculator 13 (specifically, the target determination section 13b2) is configured to determine whether the movable object reaches the same position as the target object. The movable object may not completely agree with the target object. Specifically, the movable object may be determined to reach the target object when each of the movable object and the target object approaches a predetermined extent. Such determination as to whether the movable object reaches the target object is equivalent to determination as to whether movement of the movable object (manipulation object) to the position of a manipulation target is achieved. The calculator 13 is configured to determine whether the attachment movable object 30b reaches the attachment target object 31b. The calculator 13 is configured to determine whether the input device movable object 30a reaches the input device target object 31a. For instance, the calculator 13 determines whether the traveling lever object 30a2 reaches the traveling lever target object 31a2. For instance, the calculator 13 determines whether the attachment manipulation lever object 30a1 reaches the attachment manipulation lever target object 31a1. For instance, the calculator 13 determines whether the input device movable object 30a reaches the input device target object 31a by the time the attachment movable object 30b reaches attachment target object 31b.

The calculator 13 may be configured to provide the operator with feedback reflecting a result of the determination. The feedback to the operator includes notification of appropriateness of a manipulation to the input device 11. For instance, feedback including information indicating that a movable object reaches the same position as a target object may be provided. Feedback on a manipulation from the operator includes notification of inappropriateness of the manipulation. For instance, the calculator 13 may be configured to issue a warning against no input of a manipulation into the input device 11 for a predetermined time since presentation of a target object. For instance, the calculator 13 may be configured to issue a warning in a case where the input device 11 receives input of a manipulation that does not allow a movable object to reach the same position as the target object after the presentation of the target object. Such a manipulation as not to allow the movable object to reach the same position as the target object includes an erroneous manipulation to an unintended manipulation object, for example, the traveling lever 11a2 is erroneously manipulated although the manipulation is intended for the attachment manipulation lever 11a1. For instance, the calculator 13 may be configured to issue a warning in a case where the movable object fails to reach the same position as the target object for a predetermined time since presentation of a manipulation target. The calculator 13 may provide feedback through output of sound or voice guidance, a sound output of a warning sound, or through displaying of a comment on the display part 12a.

### Safety Training Function

The calculator 13 is configured to determine whether the operator can perform an appropriate manipulation in an attention required state where the working machine 4 is likely to transition to an unsafe state. The calculator 13 (specifically, the manipulation determination section 13b5) determines, for example depending on a situation of each of the working machine 4 and the surrounding environment, appropriateness or inappropriateness of a manipulation received by the input device 11.

The calculator 13 (specifically, the object processing section 13b1) is configured to move an object of at least one of the working machine 4 and the surrounding environment so that the working machine 4 comes into the unsafe state. In other words, the calculator 13 allows an object of at least one of the working machine 4 and the surrounding environment to move so that the working machine 4 transitions from a state where the safety is ensured to an unsafe state where the safety is not ensured. For instance, the calculator 13 may make an object of at least one of the working machine 4 and the surrounding environment automatically move to compulsorily create such an unsafe state as stored in the storage part 13a in advance. Alternatively, the calculator 13 may arrange an object of each of the working machine 4 and the surrounding environment to reproduce the attention required state prior to the transition of the working machine 4 to the unsafe state, the attention required state being a state where the working machine 4 is likely to come into the unsafe state depending on a content of a manipulation (manipulation by hand) input from the operator into the input device 11. For instance, the storage part 13a stores the attention required state in advance. In this case, after reproducing the stored attention required state, the calculator 13 may move an object of the working machine 4 in accordance with a content of a manipulation by hand from the operator as performed in the state, and determine whether the working machine 4 transitions to the unsafe state during the movement.

Specifically, one example of the unsafe state is collapse of an unstable foothold attributed to a work by the working machine 4 at the foothold. Another example of the unsafe state is overturning of the working machine 4 attributed to instability resulting from hoisting a work target having a weight exceeding a capacity of the working machine. Further another example of the unsafe state is overturning of the working machine 4 attributed to strong swaying thereof resulting from a sudden change in the posture of the working machine 4 on a slope. Still another example of the unsafe state is contact of the attachment 43 of the working machine 4 with a person who approaches the working machine 4. The definition of "movement" includes a change in the posture of the working machine 4. For instance, the "movement" involves a change in the posture of the working machine 4 to perform a certain work. Works by the working machine 4 include a crane work, a work of scooping a work target, an excavation work of excavating a work target, a sandwiching work of sandwiching a work target, a holding work of holding a work target, a crushing work of crushing a work target, and a work of attracting a metal work target.

When the working machine 4 transitions to the unsafe state, the calculator 13 (specifically, the output control section 13b4) is configured to make the motion seat 12b2 give motion depending on the unsafe state resulting from the transition. For instance, the calculator 13 is configured to inform the operator of the unsafe state of the working machine 4 through tilting or vibration of the motion seat 12b2 in response to a change in a posture of the working machine 4 or vibration thereof as estimated in the transition to the unsafe state.

When the calculator 13 reproduces the above-described attention required state, the operator inputs a manipulation to ensure the safety into the input device 11 depending on a situation of at least one of the working machine 4 and the surrounding environment. The calculator 13 may execute teaching of encouraging the operator to perform a manipulation to ensure the safety. The calculator 13 is configured to determine appropriateness or inappropriateness of the manipulation received by the input device 11. For instance, the calculator 13 determines whether the manipulation is appropriate or inappropriate at a timing when the input device 11 receives the manipulation.

A specific example concerning determination of appropriateness or inappropriateness of a manipulation depending on a situation of each of the working machine 4 and the surrounding environment will be described. In the example in Fig. 5, an object of a person serving as an object of the surrounding environment, i.e., the person object 30P, is generated, and a situation where the person object 30P approaches the working machine 4 is reproduced. At this time, the display unit 12a1 (the main center display 12a1A in the example in Fig. 5) displays that a person approaches the working machine 4. The calculator 13 calculates a separation distance R between the working machine 4 and the person object 30P at the timing when the input device 11 receives the manipulation, and determines appropriateness or inappropriateness of the manipulation on the basis of the calculated separation distance R. In the embodiment, the calculator 13 calculates, as the separation distance R, a distance from a slewing center of the working machine 4 (a rotation axis of the upper slewing body 41b) to the person object 30P.

An appropriate manipulation changes depending on the separation distance R. For instance, in a case where the separation distance R is longer than a reference distance R1 obtained by adding an allowance distance α to a maximum reachable distance R2 of the working machine 4, no manipulation to cach of the lock mechanism 11b and the horn manipulation part 11c is appropriate. For instance, in a case where the separation distance R is equal to or longer than the maximum reachable distance R2 of the working machine 4 and equal to or shorter than the reference distance R1, pressing the horn manipulation part 11c to honk the horn is appropriate. For instance, in a case where the separation distance R is shorter than the maximum reachable distance R2 of the working machine 4, manipulating the horn manipulation part 11c to honk the hone and placing the lock mechanism 11b in an "ON" state to lock the working machine 4 so as not to act is appropriate. For instance, the storage part 13a stores an appropriate manipulation for each case in advance. The calculator 13 determines appropriateness or inappropriateness of a manipulation on the basis of comparison between an appropriate manipulation varying depending on the separation distance R and a manipulation actually input from the operator into the input device 11. Specifically, in response to input of a manipulation from the operator into the input device 11 in the attention required state of the working machine 4, the calculator 13 calculates a separation distance R at a timing of the inputting, and specifies an appropriate work conforming to the calculated separation distance R by, for example, reading out the appropriate work from the storage part 13a. Then, when the specified appropriate work agrees with a work actually input into the input device 11, the input manipulation is determined to be appropriate. In other words, the calculator 13 is configured to determine the appropriateness or inappropriateness of the manipulation on the basis of a content of the manipulation input into the input device 11 and the separation distance R at a timing of the inputting of the manipulation.

Here, the separation distance R is a kind of safety index that influences safety of a work. The safety index has a value that changes depending on a situation of at least one of the working machine 4 and the surrounding environment, and the index is used to determine appropriateness or inappropriateness of a work.

Although not shown, appropriateness or inappropriateness of a manipulation in a situation where the working machine 4 performs a crane work may be determined. For instance, the calculator 13 calculates an overturning moment when the working machine 4 performs a crane work of hoisting a hanged load, and determines appropriateness or inappropriateness of the manipulation on the basis of the calculated overturning moment. The overturning moment is calculated on the basis of a mass of the hanged load and a distance from the hanged load to an overturning fulcrum of the working machine 4. For instance, in a case where a manipulation to make the attachment 43 hoist a hanged load is input into the input device 11 (when the crane work is performed) despite an overturning moment having a value exceeding a threshold, the calculator 13 determines that the manipulation is inappropriate.

The calculator 13 executes teaching to the operator after determining appropriateness or inappropriateness of the manipulation. The calculator 13 teaches a point to ensure the safety to the operator. Examples of a way of teaching to the operator include a way of presenting a comment including advice on an appropriate manipulation to the operator. In this case, the storage part 13a stores, in advance, various comments each reflecting a result of determination. After determination of appropriateness or inappropriateness of the manipulation, the calculator 13 is configured to read out a certain comment reflecting a result of the determination from the storage part 13a and present the comment to the operator. The comment is presented to the operator through, for example, displaying on the display part 12a. Alternatively, a score acquired by the operator may be presented in place of the comment. The score is calculated on the basis of a predetermined calculation formula so that a score is added depending on, for example, the appropriateness of the manipulation.

The calculator 13 may execute the teaching to the operator through output of a report. For instance, the calculator 13 is configured to output a report including a situation of at least one of the working machine 4 and the surrounding environment per time and information indicating appropriateness or inappropriateness of the input. Alternatively, the calculator 13 outputs a report including a timing at which the manipulation is actually input into the input device 11, and an appropriate timing for inputting of the manipulation. The calculator 13 is configured to cause the storage part 13a to store the report. The calculator 13 may be configured to cause the storage part 13a of the server 20 to store the report.

### Menu Screen Image

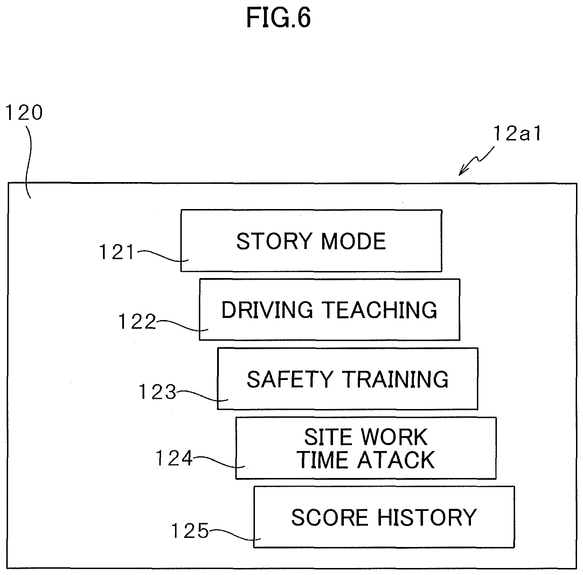

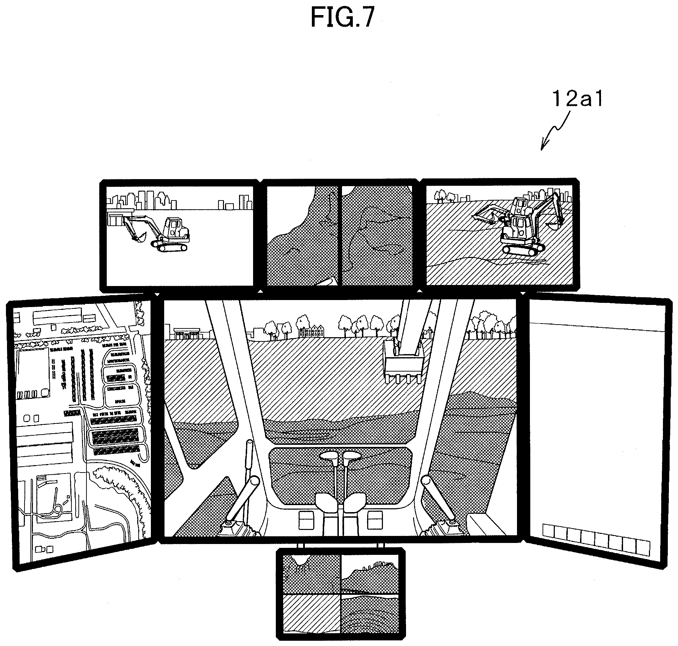

Each of the driving teaching function and the safety training function described above is executed through a menu screen image 120 illustrated in Fig. 6. The menu screen image 120 is displayed on the display unit 12a1. The menu screen image 120 is an interface for selection from various functions including the driving teaching function and the safety training function. Each function is selected through the input device 11. For instance, each function may be selected through a touch screen, may be selected through the manipulation part 11a, or may be selected through voice or sound input. Specifically, the menu screen image 120 includes a story mode button 121 given "story mode". The menu screen image 120 includes a driving teaching button 122 given "driving teaching". The menu screen image 120 includes a safety training button 123 given "safety training". The menu screen image 120 includes a site work button 124 given "site work time attack". The menu screen image 120 includes a score history button 125 given "score history". When the driving teaching button 122 is selected, the driving teaching function, i.e., a driving teaching mode, is executed. When the safety training button 123 is selected, the safety training function, i.e., a safety training mode, is executed. When the site work button 124 is selected, a site work mode is executed. The site work mode is a mode of freely manipulating the working machine 4 on a simulated worksite, and competing for a score of a work to be performed in a predetermined time. When the story mode button 121 is sclccted, all the driving teaching function, the safety training function, and the site work mode are sequentially executed, that is, a story mode is executed. When the score history button 125 is selected, a score history in the site work mode is displayed (not shown). For instance, as illustrated in Fig. 7, the site work mode enables the working machine 4 to freely act in a virtual space where an object, such as landform, is arranged. Although not shown, the menu screen image 120 may additionally include a button to select a mode for remote manipulation of the real working machine 40.

### 1 Specific Example of Processing and Processes by Calculator

The calculator 13 is configured to execute various kinds of processes in various orders. Hereinafter, an example processing flow by the calculator 13 will be described.

### Menu Processing

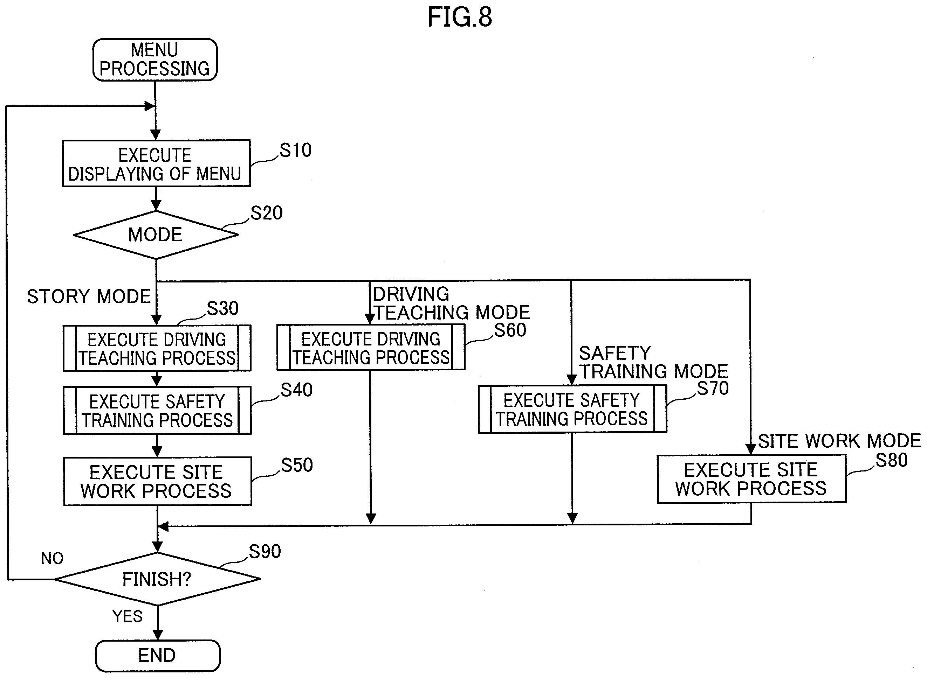

The menu processing will be described with reference to Fig. 8. The calculator 13 executes displaying of the menu screen image 120 illustrated in Fig. 6 (step S10). The calculator 13 determines a selected mode (S20). When the story mode is selected, the calculator 13 sequentially executes a driving teaching process (S30), a safety training process (S40), and a site work process (S50). When the driving teaching mode is selected, the calculator 13 executes the driving teaching process (S60). When the safety training mode is selected, the calculator 13 executes the safety training process. (S70). When the site work mode is selected, the calculator 13 executes the site work process (S80). Although not shown, in a case where each mode is prepared for each of various kinds of sites, the calculator 13 may allow the operator to select preferable one from the various kinds of sites. The calculator 13 confirms whether to finish the menu processing after execution of each mode (S90). The calculator 13 may cause the operator to confirm whether to finish the menu processing, or may automatically determine whether to finish the menu processing. When a determination result in step S90 shows "YES", the calculator 13 finishes the processing. When the determination result in step S90 shows "NO", the calculator 13 returns the processing to the displaying of the menu in step S10. In a case where a plurality of patterns is prepared for each mode of the driving teaching, the safety training, or other mode, a user may select or randomly select a pattern of each mode. Further, a mode which has not been executed in past may be selected with reference to a learning record (report) of the user.

### Driving Teaching Process

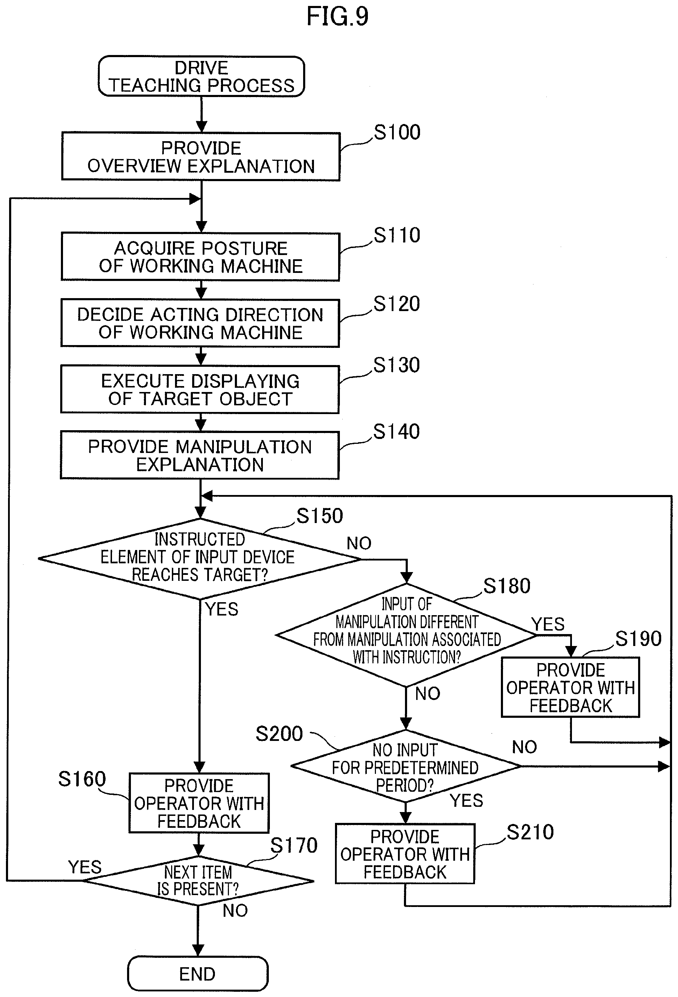

The driving teaching process will be described with reference to Fig. 9. The driving teaching process corresponds to each of step S30 and step S60 executed in the menu processing (see Fig. 8).

The calculator 13 executes displaying of an overview explanation (S100). For instance, the overview explanation includes a list of items to be fulfilled in the driving teaching. The calculator 13 acquires a current posture of the working machine 4, e.g., an angle of a manipulation object (S110). For instance, the calculator 13 acquires an angle of the arm 43a2 to the boom 43a1 for an item of training of a forward and backward operation of the arm 43a2 in execution. The calculator 13 decides an acting direction of the working machine 4 (S120). For instance, the calculator 13 decides a manipulation target of the arm 43a2 (movable object) depending on an angle of the arm 43a2. Specifically, the calculator 13 determines whether to rotate the arm 43a2 by +30 degrees or -30 degrees from a current angle of the arm 43a2. The calculator 13 causes the display unit 12a1 to display a target object (S130). Examples of the target object include an object representing the arm 43a2 having moved to a manipulation target and an object representing the attachment manipulation lever 11al when the attachment manipulation lever 11a1 is manipulated by an amount required to move the arm 43a2 to the manipulation target. The calculator 13 executes displaying of a manipulation explanation (S140). For instance, the calculator 13 causes the display unit 12a1 to display an explanation instructing which element of the input device 11 is to be manipulated. The calculator 13 determines whether the instructed element of the input device 11 (e.g., the attachment manipulation lever 11a1) reaches a position of the target object (S150). When a determination result in step S150 shows "YES", that is, when the instructed element of the input device 11 reaches the position of the target object, the calculator 13 provides the operator with feedback (S160). Thereafter, the calculator 13 determines whether a next item is present or absent (S170). When a determination result in step 170 shows "YES", that is, in presence of the next item, the calculator 13 returns the process to step S110. When the determination result in step S170 shows "NO", that is, in absence of the next item, the calculator 13 finishes the process.

In contrast, when the determination result in step S150 shows "NO", that is, when the instructed element of the input device 11 fails to reach the position of the target object, the calculator 13 determines whether a manipulation different from the manipulation associated with the instruction is input into the input device 11 by a predetermined amount or more, the different manipulation preventing an object (movable object) of a manipulation object, such as the arm 43a2, from reaching the target object (S180). When a determination result in step S180 shows "YES", that is, when a manipulation different from the manipulation associated with the instruction is input by the predetermined amount or more, the calculator 13 provides the operator with feedback (S190), and returns the process to step S150. When the determination result in step S180 shows "NO", that is, when a manipulation different from the manipulation associated with the instruction is not input, the calculator 13 determines whether the input device 11 receives no input for a predetermined time (S200). When a determination result in step S200 shows "YES", that is, in the case of no input for a predetermined time, the calculator 13 provides the operator with feedback (S210), and returns the process to step S150.

### Safety Training Process

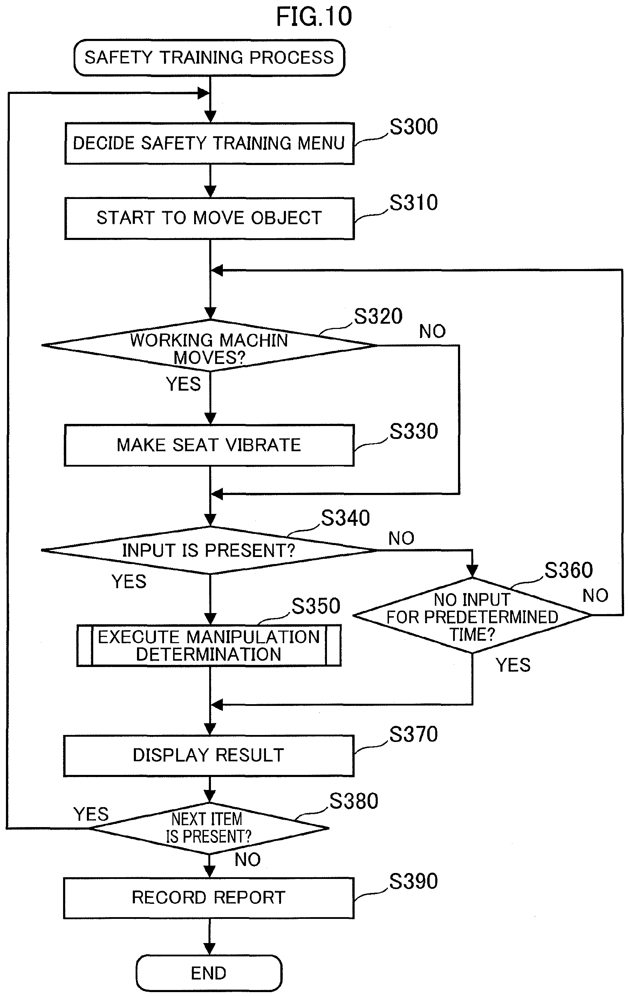

The safety training process will be described with reference to Fig. 10. The safety training process corresponds to each of step S40 and step S70 executed in the menu processing (see Fig. 8).

The calculator 13 decides a safety training menu (S300). In this regard, an attention required state where the working machine 4 is likely to transition to an unsafe state is reproduced. In this state, the calculator 13 starts to move the object (S310). For instance, the calculator 13 makes the person object 30P approach the working machine 4. The calculator 13 determines whether the working machine 4 moves (S320). When a determination result in step S320 shows "YES", that is, when the working machine 4 moves, the calculator 13 makes the motion seat 12b2 vibrate (S330). The calculator 13 determines whether input of a manipulation from the operator into the input device 11 is present or absent (S340). When a determination result in step S340 shows "YES", that is, in presence of input of the manipulation, the calculator 13 executes a manipulation determination (S350). When the determination result in step S340 shows "NO", that is, in absence of input of the manipulation, the calculator 13 determines whether the input device 11 receives no input for a predetermined time (S360). The calculator 13 executes displaying of a result (S370). The calculator 13 determines whether a next item is present or absent (S380). When a determination result in step 380 shows "YES", that is, in presence of the next item, the calculator 13 returns the process to step S300. When the determination result in step S380 shows "NO", that is, in absence of the next item, the calculator 13 records a report (step S390), and finishes the process.

### Manipulation Determination

A manipulation determination will be described with reference to Fig. 10. The manipulation determination is executed in the safety process (see Fig. 10) and corresponds to step S350.

The calculator 13 first determines a relation between the working machine 4 and the surrounding environment at a timing of inputting of a manipulation from the operator into the input device 11. Specifically, the calculator 13 calculates a separation distance R between the working machine 4 and the person object 30P at the timing of inputting and determines the calculated separation distance R (S400). That is to say, the calculator 13 compares the separation distance R with a reference distance R1 and a maximum reachable distance R2.

The calculator 13 then determines appropriateness or inappropriateness of the manipulation on the basis of the separation distance R calculated at the timing of inputting and a content of the manipulation input into the input device 11. Specifically, when the separation distance R is longer than the reference distance R1, the calculator 13 determines appropriateness or inappropriateness of the manipulation on the basis of whether the operator takes no reaction or takes a certain reaction (S410). Specifically, when a person is located at a position further away from the working machine 4 than the reference distance R1, no reaction by the operator, that is, no manipulation to each of the horn manipulation part 11c and the lock mechanism 11b, is an appropriate reaction that the operator may take. As described above, the reference distance R1 has a value "R2 + α" obtained by adding an allowance distance α to the maximum reachable distance R2 of the working machinc 4. For instance, the allowance distance α can be defined as 2m.

When the separation distance R is equal to or shorter than the reference distance R1 and equal to or longer than the maximum reachable distance R2, the calculator 13 determines appropriateness or inappropriateness of the manipulation on the basis of whether the operator honks the horn or not (S420). Specifically, when a person is located at a distance equal to or shorter than the reference distance R1 and equal to or longer than the maximum reachable distance R2 from the working machine 4, pressing the horn manipulation part 11c to honk the horn, that is, issuing a warning to the person who approaches, by the operator is an appropriate reaction that the operator may take.

When the separation distance R is shorter than the maximum reachable distance R2, the calculator 13 determines appropriateness or inappropriateness on the basis of whether the operator honks the horn and locks an associated lever or not (S430). Specifically, when a person is located at a distance shorter than the maximum reachable distance R2 from the working machine 4, honking the horn to issue a warning to the person who approaches and placing the lock mechanism 11b in the "ON" state to lock the working machine 4 so as not to act is an appropriate reaction that the operator may take.

### Conclusion

Effects by the simulator system 1 described above will be discussed below.
(1) A simulator system 1 includes a calculator 13, a display part 12a, and an input device 11. The calculator 13 is configured to reproduce, in a virtual space, a working machine 4 including an attachment 43, and a surrounding environment of the working machine. The display part 12a displays the working machine 4 and the surrounding environment. The input device 11 receives a manipulation from an operator to make the working machine 4 act in the virtual space. The calculator 13 includes an object processing section 13b1 and a manipulation determination section 13b5. The object processing section 13b1 is configured to move an object of at least one of the working machine 4 and the surrounding environment so that the working machine 4 comes into an unsafe state. The manipulation determination section 13b5 determines, on the basis of a content of a manipulation input from the operator into the input device 11 when the working machine 4 is in an attention required state prior to transition to the unsafe state, appropriateness or inappropriateness of the manipulation input into the input device 11.

The configuration (1) enables the operator to virtually experience the unsafe state of the working machine 4. The configuration further achieves evaluation of the appropriateness or inappropriateness of the manipulation on the basis of a content of the manipulation input from the operator into the input device 11 in the attention required state prior to transition to the unsafe state. This consequently allows the operator to master an appropriate manipulation required to ensure safety.

(2) The simulator system 1 further includes a motion seat 12b2 that allows the operator to sit thereon. The calculator 13 is configured to inform the operator of the unsafe state of the working machine 4 through motion of the motion seat 12b2.

The configuration (2) makes it possible to inform the operator of the unsafe state of the working machine 4 through motion of the motion seat 12b2. Examples of the motion of the motion seat 12b2 may include fluctuation in a tilt angle of a seat base, vibration of the seat base, or a combination of the fluctuation and the vibration.

(3) The input device 11 has operability for remote manipulation of a real working machine 40.

The configuration (3) enables a simulator for manipulation training to serve as a real remote apparatus. This allows the operator to achieve an actual work without a change in a manipulation feeling.

(4) The manipulation determination section 13b5 is configured to calculate, depending on a situation of at least one of the working machine 4 and the surrounding environment, a safety index that influences safety of a work. The manipulation determination section 13b5 determines, on the basis of the content of the manipulation input into the input device 11 and the safety index calculated at a timing of the inputting of the manipulation, the appropriateness or inappropriateness of the manipulation in the attention required state of the working machine 4.

The configuration (4) enables appropriate evaluation of a manipulation from the operator in the attention required state of the working machine 4 on the basis of the safety index at the timing of the inputting of the manipulation.

(5) For instance, the safety index includes a separation distance R between the working machine 4 and a specific object (e.g., a person object 30P) of the surrounding environment.

In presence of such a specific object of the surrounding environment around the working machine 4, an appropriate manipulation to be input into the input device 11 changes depending on the separation distance R between the working machine 4 and the specific object. For instance, in a case where the object of the surrounding environment is the person object 30P, the operator is required to select and use a specific manipulation from among various manipulations including a manipulation to honk a horn, a manipulation to lock a lever, and other manipulations, depending on a separation distance R between the working machine 4 and the person object 30P. The configuration (5) that utilizes the separation distance R at the time of inputting a manipulation as the safety index achieves, on the basis the separation distance R and a content of the manipulation, accurate determination of appropriateness or inappropriateness of the manipulation depending on the separation distance R.

(6) In a crane work by the working machine 4, the manipulation determination section 13b5 calculates, as the safety index, an overturning moment defined on the basis of a mass of a hanged load and a distance from the hoisted load to an overturning fulcrum of the working machine 4. Besides, the manipulation determination section 13b5 determines that a manipulation of hoisting the hanged load is inappropriate when the manipulation of hoisting the hanged load is input into the input device 11 in a state where the calculated overturning moment exceeds a predetermined threshold.

The configuration (6) enables determination of appropriateness or inappropriateness of a manipulation on the basis of input or no input of such a manipulation from the operator as to perform the crane work whose overturning moment exceeds the threshold.

(7) The simulator system 1 further includes a storage part 13a that stores, in advance, a comment reflecting the determination by the manipulation determination section 13b5. The calculator 13 is configured to present the comment stored in the storage part 13a to the operator after the determination by the manipulation determination section 13b5.

The configuration (7) allows the operator to reduce error or mistake by presenting a comment reflecting a result of the determination to the operator.

(8) The calculator 13 is configured to output a report including a situation of at least one of the working machine 4 and the surrounding environment (e.g., the person object 30P) per time and information indicating the appropriateness or inappropriateness of the manipulation, after the determination by the manipulation determination section 13b5.

The configuration (8) allows, for example, an instructor to give an appropriate instruction to the operator by using the output report.

(9) The calculator 13 is configured to output a report including a timing at which the manipulation is actually input into the input device 11, and an appropriate timing for inputting of the manipulation, after the determination by the manipulation determination section 13b5.

The configuration (9) allows, for example, an instructor to give an appropriate instruction to the operator by using the output report.

(10)The simulator system 1 further includes a server 20 communicably connected to the calculator 13. The calculator 13 is configured to cause the server 20 to store the report.

The configuration (10) enables the server 20 to store the report.

### Modifications

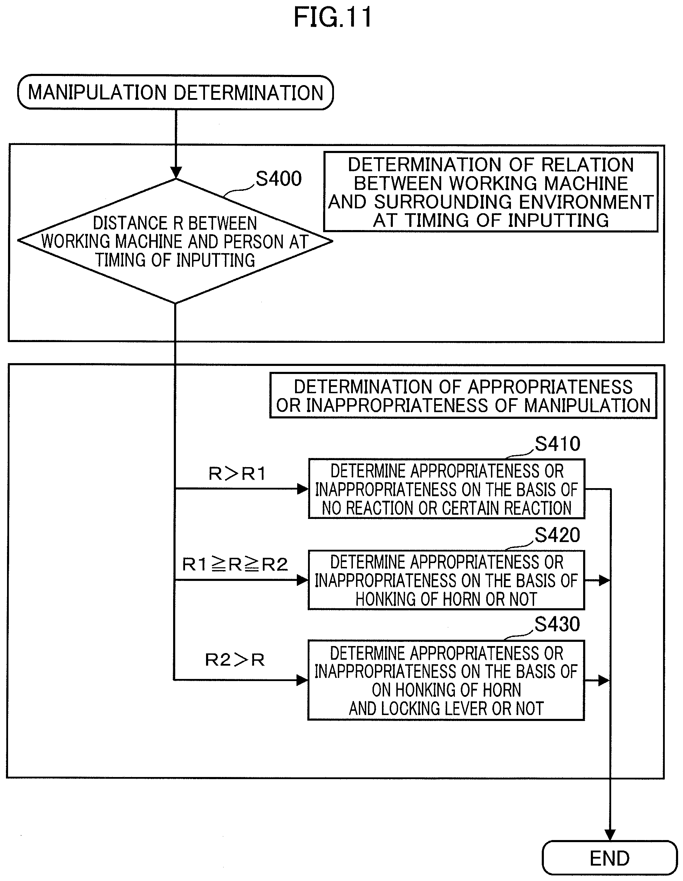

The embodiment described above may be modified in various ways. For instance, the modifications of the embodiments may be combined with each other in various ways. For instance, the connection between or among the constituent elements shown in Fig. 1 and other drawings may be changed. For example, the number of constituent elements in the embodiment may be changed, and one or more of the constituent elements are excludable. The "constituent elements" include a constituent element (object) in a virtual space (the same applies below). For example, the arrangement of each of the constituent elements may be changed. For example, the inclusion relation of the constituent elements may be variously changed. For instance, a constituent clement under a lower concept described to be included in a constituent clement under a higher concept may not be included in the constituent element under the higher concept. The constituent elements are described as members different from one another or a part of the structure, but may, for example, cover a single member or a part of a specific member. For instance, the constituent element described as a single member or a part of a specific member may cover a plurality of members or parts different from one another. For instance, the order of the steps in the flowchart shown in Fig. 8 to Fig. 11 may be changed, and a part of the steps may not be executed. Each constituent element may have, for example, only a part of features, such as operative function, an arrangement, a shape, and movement or operation.

## Claims

1. A simulator system, comprising:
a calculator that is configured to reproduce, in a virtual space, a working machine including an attachment, and a surrounding environment of the working machine;
a display part that displays the working machine and the surrounding environment; and
an input device that receives a manipulation from an operator to make the working machine act in the virtual space, wherein
the calculator includes:
an object processing section that is configured to move an object of at least one of the working machine and the surrounding environment so that the working machine comes into an unsafe state; and
a manipulation determination section that determines, on the basis of a content of a manipulation input from the operator into the input device when the working machine is in an attention required state prior to transition to the unsafe state, appropriateness or inappropriateness of the manipulation input into the input device.

2. The simulator system according to claim 1, further comprising a motion seat that allows the operator to sit thereon, wherein
the calculator is configured to inform the operator of the unsafe state of the working machine through motion of the motion seat.

3. The simulator system according to claim 1, wherein the input device has operability for remote manipulation of a real machine corresponding to the working machine.

4. The simulator system according to claim 1, wherein the manipulation determination section is configured to calculate, depending on a situation of at least one of the working machine and the surrounding environment, a safety index that influences safety of a work, and
the manipulation determination section determines, on the basis of the content of the manipulation input into the input device and the safety index calculated at a timing of the inputting of the manipulation, the appropriateness or inappropriateness of the manipulation in the attention required state.

5. The simulator system according to claim 4, wherein the safety index includes a separation distance between the working machine and a specific object of the surrounding environment.

6. The simulator system according to claim 4, wherein, in a crane work by the working machine, the manipulation determination section calculates, as the safety index, an overturning moment that is defined on the basis of a mass of a hanged load and a distance from the hanged load to an overturning fulcrum of the working machine, and determines that a manipulation of hoisting the hanged load is inappropriate when the manipulation of hoisting the hanged load is input into the input device in a state where the calculated overturning moment exceeds a predetermined threshold.

7. The simulator system according to claim 4, further comprising a storage part that stores, in advance, a comment reflecting the determination by the manipulation determination section, wherein
the calculator is configured to present the comment to the operator alter the determination by the manipulation determination section.

8. The simulator system according to claim 4, wherein the calculator is configured to output a report including a situation of at least one of the working machine and the surrounding environment per time and information indicating the appropriateness or inappropriateness of the manipulation, after the determination by the manipulation determination section.

9. The simulator system according to claim 4, wherein the calculator is configured to output a report including a timing at which the manipulation is actually input into the input device, and an appropriate timing for inputting of the manipulation, after the determination by the manipulation determination section.

10. The simulator system according to claim 8 or claim 9, further comprising a server communicably connected to the calculator, wherein
the calculator is configured to cause the server to store the report.
